Europäisches Patentamt

European Patent Office

Office européen des brevets

(11) Veröffentlichungsnummer: **0 220 623**
**B1**

(12) **EUROPÄISCHE PATENTSCHRIFT**

(45) Veröffentlichungstag der Patentschrift:
06.09.89

(21) Anmeldenummer: 86114379.0

(22) Anmeldetag: 17.10.86

(51) Int. Cl.⁴: **B65G 47/24**

(54) Vorrichtung zum gleichmässigen Ausrichten von untereinander gleichen Gegenständen.

(30) Priorität: 23.10.85 DE 3537597

(43) Veröffentlichungstag der Anmeldung:
06.05.87 Patentblatt 87/19

(45) Bekanntmachung des Hinweises auf die Patenterteilung:
06.09.89 Patentblatt 89/36

(84) Benannte Vertragsstaaten:
AT CH ES FR GB IT LI

(56) Entgegenhaltungen:
GB-A- 1 495 181
US-A- 3 578 141

(73) Patentinhaber: Croon + Lucke Maschinenfabrik GmbH
+ Co. KG, Flachsstrasse 14, D-7947 Mengen(DE)

(72) Erfinder: Wedler, Klaus, Beethovenstrasse 59,
D-7951 Mittelbiberach(DE)
Erfinder: Uhl, Winfried, Dekan-Buch-Weg 6,
D-7947 Mengen-Ennetach(DE)

�><74 Vertreter: Hoeger, Stellrecht & Partner,
Uhlandstrasse 14 c, D-7000 Stuttgart 1(DE)

## Beschreibung

Die Erfindung betrifft eine Vorrichtung zum gleichmäßigen Ausrichten von im wesentlichen zylindrischen und untereinander gleichen Gegenständen nach dem Oberbegriff des Patentanspruchs 1.

Bei einer bekannten Vorrichtung dieser Art (DE-B 1 067 728) laufen die beiden Förderbänder, an welche sich die auszurichtenden Gegenstände anlegen, gleichsinnig um. Es müssen daher besondere Zusatzeinrichtungen in Form von Haken und Federn vorgesehen werden, um die Gegenstände gleichsinnig auf den beiden Förderbändern auszurichten. Außerdem ist ein besonderer ortsfester Trichter erforderlich, in welchen die auszurichtenden Gegenstände eingelegt werden.

Der Erfindung liegt die Aufgabe zugrunde, eine gattungsgemäße Vorrichtung so zu verbessern, daß ohne zusätzliche Hilfsmittel in kurzer Zeit eine weitgehend vollkommene Ausrichtung der Gegenstände ermöglicht ist.

Die Aufgabe wird erfindungsgemäß durch die Merkmale im Kennzeichen des Patentanspruchs 1 gelöst.

Die nachstehende Beschreibung einer bevorzugten Ausführungsform der Erfindung dient im Zusammenhang mit beiliegender Zeichnung, auf welcher ein Ausführungsbeispiel schematisch in schaubildlicher Ansicht dargestellt ist, der weiteren Erläuterung.

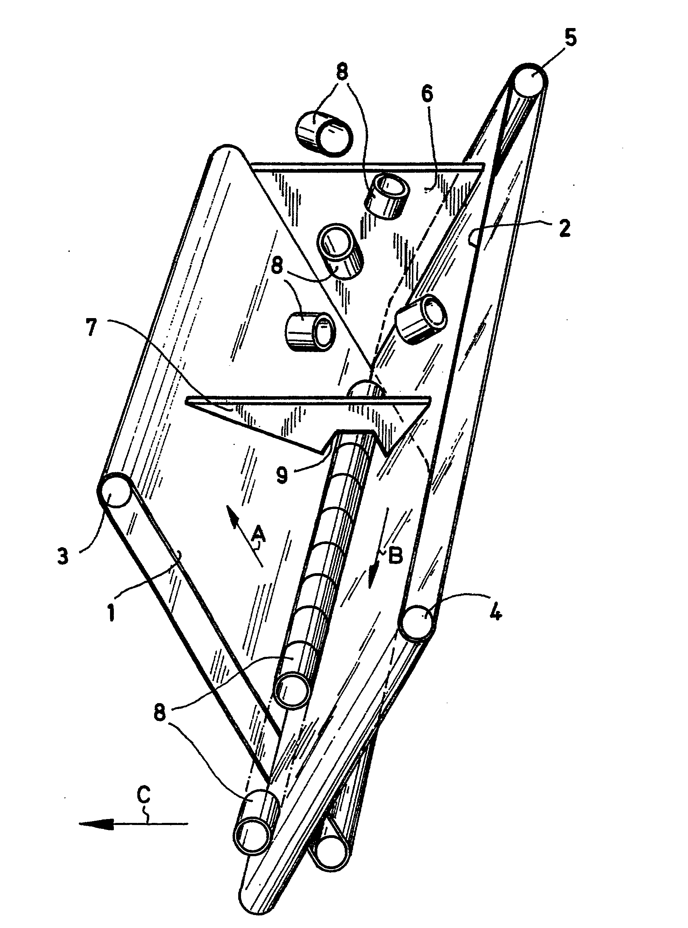

Die auf der Zeichnung dargestellte Ausrichtvorrichtung umfaßt zwei Förderbänder, nämlich ein erstes Förderband 1 und ein zweites Förderband 2. Die Förderbänder 1, 2 sind in herkömmlicher Weise über Umlenkwalzen geführt, von denen auf der Zeichnung Walzen 3, 4 und 5 sichtbar sind. Der Antrieb der Förderbänder 1, 2 erfolgt über nicht dargestellte, an jeweils einer Umlenkwalze angreifende Antriebsmotoren, und zwar in der Weise, daß die einander zugewandten Trume der Förderbänder 1, 2 in Richtung der Pfeile A bzw. B vorlaufen. Durch diese Trume sind auch jeweils die Förderebenen der Transportbänder 1, 2 bestimmt.

Wie dargestellt, konvergieren das erste und zweite Förderband 1 bzw. 2 mit ihren Förderebenen nach unten zu einem keilförmigen Trichter, der an seinen Stirnseiten durch ortsfeste Wände 6, 7 abgeschlossen ist. Die Wände 6, 7 verlaufen im wesentlichen senkrecht zu den Förderebenen. Sie können relativ zueinander schräg, vorzugsweise zueinander schräg nach unten konvergierend verlaufen. Die beiden Förderbänder 1, 2 liegen an der Konvergenzstelle des Trichters so nahe beieinander, daß in den Trichter regellos eingefüllte, auszurichtende Gegenstände 8, z.B. Zylinderhülsen, nicht aus dem Trichter austreten können. Entsprechendes gilt für die Wände 6, 7 mit Bezug auf den Abstand ihrer Kanten von den Förderbändern 1, 2.

Die Förderrichtung A des ersten Förderbandes 1 verläuft ausgehend von der Trichterkante von unten nach oben. Die Förderrichtung B des zweiten Förderbandes 2 verläuft quer zur Förderrichtung A, vorzugsweise senkrecht hierzu, wie im Ausführungsbeispiel der Zeichnung dargestellt.

Somit wirken im Bereich des Trichters auf die an den Förderbändern 1, 2 unter ihrem Eigengewicht anliegenden Gegenstände 8 Reibungskräfte und Drehmomente, welche die Gegenstände ausrichten. Die Ausrichtung erfolgt überraschenderweise derart, daß sich in unmittelbarer Nähe der Trichterkante eine Reihe ausgerichteter Gegenstände 8 bildet, die in Richtung des Pfeiles B allmählich aus dem Trichter herausgeschoben wird, so daß die Gegenstände 8 in Richtung des Pfeiles C ausgerichtet, d.h. sortiert und geordnet entnommen werden können.

Falls die Stirnwand 7 vorgesehen wird, weist diese eine Austrittsöffnung 9 für die ausgerichteten Gegenstände 8 auf.

Wie dargestellt, ist das quer zum Förderband 1 umlaufende Förderband 2 länger als die Breite des Förderbands 1, so daß das Förderband 2 seitlich über das Förderband 1 übersteht. Hierdurch können die ausgerichteten Gegenstände 8 leicht in Pfeilrichtung C geordnet abgenommen werden.

Die den Trichter bildenden Förderebenen der Förderbänder 1, 2 können in einem Winkel zwischen 30° und 120°, vorzugsweise zwischen 30° und 60° konvergieren. Dieser Winkel sowie der Winkel zwischen den Förderrichtungen A und B der Förderbänder 1 bzw. 2 können in Anpassung an die Größe, Gestalt und das Gewicht der zu sortierenden Gegenstände 8 ohne weiteres passend variiert werden.

Entsprechendes gilt auch für die Größe und Anordnung der ortsfesten Wände 6, 7, die bei entsprechend großer Breite des Förderbandes 1 und entsprechend großer Länge des Förderbandes 2 auch weggelassen werden können. In diesem Falle werden die Gegenstände 8 ungeordnet an der einen Stirnseite des Trichters angehäuft. Es bildet sich dann, wie auf der Zeichnung dargestellt, eine vom Förderband 2 abtransportierte Reihe ausgerichteter Gegenstände, die an der dem Gegenstandshaufen gegenüberliegenden Ende des Förderbands 2 abgenommen werden kann.

Es wurde gefunden, daß mit der beschriebenen Vorrichtung Gegenstände 8 sehr schnell ausgerichtet werden können, und die Vorrichtung somit einen sehr hohen Gegenstandsausstoß pro Zeiteinheit hat. Am leichtesten lassen sich mit der beschriebenen Vorrichtung untereinander gleiche Gegenstände 8 ausrichten. Die Vorrichtung eignet sich jedoch aber auch für Gegenstände, die in Form, Größe und Gewicht in gewissen Grenzen voneinander abweichen.

## Patentansprüche

1. Vorrichtung zum gleichmäßigen Ausrichten von im wesentlichen zylindrischen und untereinander gleichen Gegenständen durch Anlegen der Gegenstände an zwei umlaufende Förderbänder, die mit ihren Förderebenen nach unten konvergieren, dadurch gekennzeichnet, daß sich die beiden Förderbänder (1, 2) nach oben zu einem die auszurichtenden Gegenstände (8) regellos aufnehmenden, keilförmigen Trichter erweitern, und daß das eine Förderband (1) von unten nach oben und das andere Förderband (2) quer hierzu umläuft.

2. Vorrichtung nach Anspruch 1 mit einer ortsfesten Abschlußwand an einem Ende der Förderbänder, dadurch gekennzeichnet, daß der Abschlußwand (6) eine Stirnwand (7) mit einer Öffnung (9) zum Austritt der ausgerichteten Gegenstände (8) gegenüberliegt.

3. Vorrichtung nach Anspruch 1, dadurch gekennzeichnet, daß die Förderrichtungen (A, B) der Förderbänder (1, 2) aufeinander senkrecht stehen.

4. Vorrichtung nach Anspruch 1, dadurch gekennzeichnet, daß die Förderebenen der Förderbänder (1, 2) in einem Winkel zwischen 30° und 120° konvergieren.

5. Vorrichtung nach Anspruch 4, dadurch gekennzeichnet, daß der Konvergenzwinkel zwischen 30° und 60° liegt.

## Claims

1. A device for uniform alignment of substantially cylindrical objects which are similar to each other by the placing of the objects on two revolving conveyor belts, the conveying surfaces of which converge downwardly, characterized in that the two conveyor belts (1, 2) diverge upwardly to form a wedge-shaped funnel which receives in a random orientation the objects (8) to be aligned, and in that one conveyor belt (1) revolves from the bottom upwardly and the other conveyor belt (2) revolves transversely thereto.

2. A device according to Claim 1 having a permanently positioned end wall at one end of the conveyor belts, characterized in that the end wall (6) is situated opposite a front wall (7) comprising an opening (9) for the emergence of the aligned objects (8).

3. A device according to Claim 1, characterized in that the directions of conveyance (A, B) of the conveyor belts (1, 2) are perpendicular to one another.

4. A device according to Claim 1, characterized in that the conveying surfaces of the conveyor belts (1, 2) converge at an angle of between 30° and 120°.

5. A device according to Claim 4, characterized in that the angle of convergence is between 30° and 60°.

## Revendications

1. Dispositif d'alignement uniforme d'objets identiques entre eux et essentiellement cylindriques, par la mise en contact des objets avec deux bandes transporteuses en circulation qui ont leurs plans de transport convergeant vers le bas, caractérisé en ce que les deux bandes transporteuses (1, 2) s'élargissent vers le haut en un entonnoir analogue à un coin recevant sans ordre les objets (8) à aligner et en ce qu'une bande transporteuse (1) circule de bas en haut et l'autre bande transporteuse (2) circule transversalement à cette direction.

2. Dispositif selon la revendication 1 avec une paroi fixe de fermeture à une extrémité des bandes transporteuses, caractérisé en ce qu'à la paroi de fermeture (6) est opposée une paroi frontale (7) ayant une ouverture (9) pour la sortie des objets (8) alignés.

3. Dispositif selon la revendication 1, caractérisé en ce que les directions de transport (A, B) des bandes transporteuses (1, 2) sont perpendiculaires l'une à l'autre.

4. Dispositif selon la revendication 1, caractérisé en ce que les plans de transport des bandes transporteuses (1, 2) convergent en faisant un angle compris entre 30° et 120°.

5. Dispositif selon la revendication 4, caractérisé en ce que l'angle de convergence est compris entre 30° et 60°.